(19) Europäisches Patentamt

European Patent Office

Office européen des brevets

(11) **EP 3 627 147 B1**

(12) **EUROPEAN PATENT SPECIFICATION**

(45) Date of publication and mention
of the grant of the patent:
**10.08.2022 Bulletin 2022/32**

(21) Application number: **19000474.7**

(22) Date of filing: **07.12.2012**

(51) International Patent Classification (IPC):
**G01N 27/22** $^{(2006.01)}$

(52) Cooperative Patent Classification (CPC):
**G01N 27/226**; G06F 3/044; H04M 2250/22

(54) **CAPACITIVE SENSOR AND CORRESPONDING METHOD FOR MEASURING THE PERMITTIVITY OF AN OBJECT**

KAPAZITIVER SENSOR UND ENTSPRECHENDES VERFAHREN ZUR MESSUNG DER PERMITTIVITÄT EINES OBJEKTS

CAPTEUR CAPACITIF ET MÉTHODE CORRESPONDANTE POUR MESURER LA PERMITTIVITÉ D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2011 GB 201121242
02.03.2012 US 201213410764**

(43) Date of publication of application:
**25.03.2020 Bulletin 2020/13**

(62) Document number(s) of the earlier application(s) in accordance with Art. 76 EPC:
**12813936.7 / 2 788 744**

(73) Proprietor: **Zedsen Limited
London W4 5YA (GB)**

(72) Inventor: **MAMIGONIANS, Hrand Mami
London
W5 3EB (GB)**

(74) Representative: **Atkinson & Company
Intellectual Property Limited
7 Moorgate Road
Rotherham S60 2BF (GB)**

(56) References cited:
**US-A1- 2010 295 814**

• XIA CHEN ET AL: "Image reconstruction for an electrical capacitance tomography system based on a least-squares support vector machine and a self-adaptive particle swarm optimization algorithm;Image reconstruction for an ECT system based on a LS-SVM and a self-adaptive particle swarm optimization algorithm", MEASUREMENT SCIENCE AND TECHNOLOGY, IOP, BRISTOL, GB, vol. 22, no. 10, 104008, 9 September 2011 (2011-09-09), pages 1-9, XP020211890, ISSN: 0957-0233, DOI: 10.1088/0957-0233/22/10/104008
• QUEK ET AL: "Miniature electrical tomography for Micro-fluidic systems", SIXTH WORLD CONGRESS ON INDUSTRIAL PROCESS TOMOGRAPHY (WCIPT6) : HELD IN THE CAMPUS OF BEIHANG UNIVERSITY, BEIJING, CHINA, FROM 6 - 9 SEPTEMBER 2010, ISIPT, GB , 6 September 2010 (2010-09-06), pages 1320-1326, XP009518706, ISBN: 978-0-85316-322-0 Retrieved from the Internet: URL:https://www.isipt.org/world-congress/6 /800.html
• YANG DAOYE ET AL: "Effect of pipeline thickness on electrical capacitance tomography", JOURNAL OF PHYSICS: CONFERENCE SERIES, vol. 147, no. 1, 012030, 1 February 2009 (2009-02-01), pages 1-13, XP020155898, ISSN: 1742-6596

EP 3 627 147 B1

**(Cont. next page)**

- Gavin Teague: "MASS FLOW MEASUREMENT OF MULTI-PHASE MIXTURES BY MEANS OF TOMOGRAPHIC TECHNIQUES", , 1 September 2002 (2002-09-01), pages 1-115, XP055665624, Retrieved from the Internet: URL:http://mysite.mweb.co.za/residents/jontapson/index_files/GavinTeaguePhD.pdf [retrieved on 2020-02-05]
- TONG IN OH ET AL: "Multi-frequency EIT system with radially symmetric architecture: KHU Mark1; Multi-frequency EIT system: KHU Mark1", PHYSIOLOGICAL MEASUREMENT, INSTITUTE OF PHYSICS PUBLISHING, BRISTOL, GB, vol. 28, no. 7, 1 July 2007 (2007-07-01), pages S183-S196, XP020120799, ISSN: 0967-3334, DOI: 10.1088/0967-3334/28/7/S14
- Donaldson Grieve Bruce: "On-line Electrical Impedance Tomography for Industrial Batch Processing", , 1 May 2002 (2002-05-01), pages 1-67, XP055665664, Retrieved from the Internet: URL:https://www.research.manchester.ac.uk/portal/files/33441881/FULL_TEXT.PDF [retrieved on 2020-02-06]
- DIXIANG CHEN ET AL: "Design of a security screening system with a capacitance sensor matrix operating in single-electrode mode", MEASUREMENT SCIENCE AND TECHNOLOGY, IOP, BRISTOL, GB, vol. 22, no. 11, 14 October 2011 (2011-10-14), page 114026, XP020213296, ISSN: 0957-0233, DOI: 10.1088/0957-0233/22/11/114026

**Description**

**CROSS REFERENCE TO RELATED APPLICATIONS**

This application claims priority from United Kingdom Patent Application No. 11 21 242.0, filed December 09, 2011, and United States Patent Application Serial No. 13/410,764, and is a divisional application of European Patent Application No. 12 813 936.7.

**BACKGROUND OF THE INVENTION**

**1. Field of the Invention**

The present invention relates to a method of sensing the electrical permittivity of an object and a sensor for the same.

**2. Description of the Related Art**

Capacitive-type sensing devices are well known in the art. Traditionally, such sensors are used to simply infer the presence of an object on such a sensor, an example of which may be found in touch screen devices. Little research and development, however, has been conducted into the use of these types of sensor arrays and how they may be utilised to not only infer the position of an object placed upon the sensor, but also to interrogate the object for electrical properties as well, in particular its electrical permittivity.

Xia Chen et al, Image reconstruction for an electrical capacitance tomography system based on a least-squares support vector machine and a self-adaptive particle swarm optimization algorithm, Measurement Science and Technology 22 (2011) 104008 discloses an electrical capacitance tomography to determine the permittivity distribution and hence the phase distribution in a a pipeline by measuring the electrical capacitances between sets of electrodes placed around its periphery.

Sung Quek et al, Miniature Electrical Tomography for Micro-Fluidic Systems, 6th World Congress on Industrial Process Tomography, pp. 1320-1326 discloses a miniature electrical capacitance tomograph for imaging flow in microfluidic channels. An electric field is generated by an array of twelve electrodes surrounding a rectangular channel.

Chen et al, Design of a security screening system with a capacitance sensor matrix operating in single-electrode mode, Measurement Science and Technology, 22 (2011) 114026 discloses a security screening system with a capacitance sensor matrix operating in single-electrode mode.

**BRIEF SUMMARY OF THE INVENTION**

The present invention provides a sensor and a method for sensing the electrical permittivity of an object according to independent claims 1 and 7. Preferred embodiments are set forth in the dependent claims.

**BRIEF DESCRIPTION OF THE DRAWINGS**

Figure 1 shows a sensor **101** embodying an aspect of the present invention;
Figure 2 shows a block diagram of components that provide the functionality of sensor **101;**
Figure 3 shows an abstraction diagram of the structure of a sensor array configured in accordance with a first embodiment of the present invention;
Figure 4 shows a more detailed illustration of a sensor array **301;**
Figures 5A and 5B show the electric field formed within a portion of a sensor array **301;**
Figure 6 shows the electric field formed within a portion of sensor array **301** when an object is placed on it;
Figure 7 shows the signal detector used to sample the output signal from a receiver electrode;
Figure 8 shows steps carried out to initialise sensor **101;**
Figure 9 shows the process of scanning transmitter and receiver electrodes;
Figure 10 shows an example of the signals provided to signal detector **406** when an object is placed on sensor array **201;**
Figure 11 shows a sensor array **1101** that does not form part of the invention;
Figure 12 shows an exemplary arrangement of a sensor **1201** including sensor array **1101;**
Figures 13A and 13B show the electric field inside a portion of sensor array **1101;**

Figures 14A and 14B shows the electric field in side a portion of sensor array **1101** when an object is placed on it;

Figure 15 shows steps carried out to initialise sensor **1201** including sensor array **1101;** and

Figure 16 shows steps carried out to effect switching between the outputs of transmitter multiplexer **1203** and the inputs of receiver multiplexer **1205.**

## DETAILED DESCRIPTION OF EXAMPLE EMBODIMENTS

### *Figure 1*

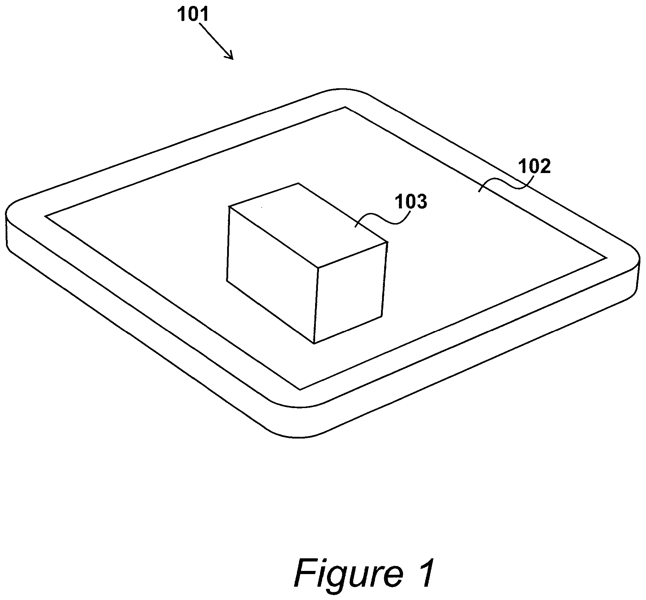

A sensor **101** embodying an aspect of the invention is illustrated in Figure 1.

Sensor **101** presents a surface **102** upon which an object may be applied. Surface **102** defines the base of a volume in which a test object may be placed. In the example shown in the Figure, an object **103** is positioned upon surface **102,** and is composed of a medium such as wood. Due to the configuration of sensor **101,** which will be described with reference to the later Figures, the electrical permittivity of object **103** can be interrogated and its properties found. Of course, whilst the sensor illustrated in the Figure shows an object being placed upon it, it is well within the scope of the principles of the invention for a sensor to be produced that is sized such that it can be placed upon an object instead.

It will be appreciated that the particular shape of object 103 is, in this example, a simple cuboid in order to simplify the description of the invention. However, the applicant has conducted numerous trials of various shapes of object and materials, and it has, through this research, been established that the invention is capable of determining both the profile and the electrical permittivity of objects placed upon the sensor, said objects being composed of either conductive, non-conductive or semi-conductive materials. Further, the research has concluded that even the presence of gas or liquid can be sensed - it will be therefore appreciated that the term "object" refers to anything placed on the sensor.

It is therefore envisaged that the principles embodied by the invention will lend themselves well to shape recognition and even to diagnosis of conditions that affect the properties of human tissue, such as arthritis, due to their effect on the electrical properties of the tissue. In addition, the invention allows the sensing of variances in electrical permittivity across the surface of or within an object placed on the sensor.

### *Figure 2*

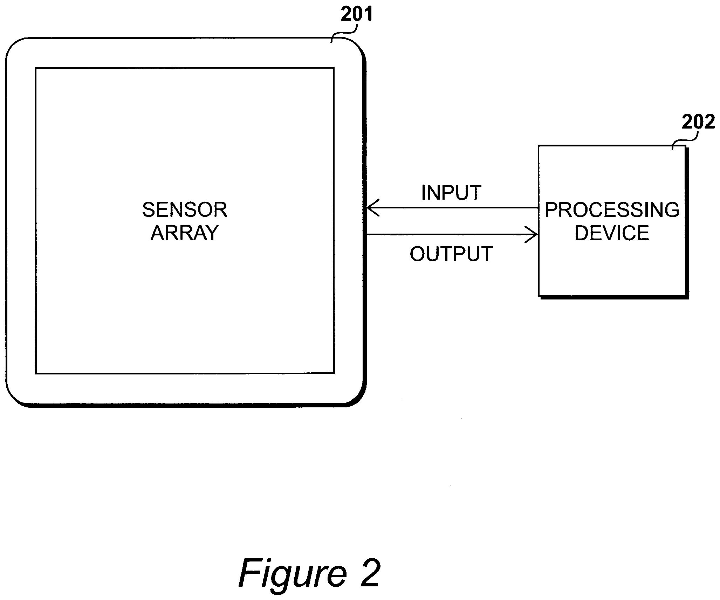

A block diagram of components that provide the functionality of sensor 101 is shown in Figure 2.

Sensor **101** comprises a sensor array **201,** which provides substantially the core functionality of the invention. Sensor array **201** is accompanied by a processing device **202,** which provides input signals to sensor array **201,** and detects and processes output signals to provide data indicating the electrical permittivity of numerous points in the volume defined above surface **102.**

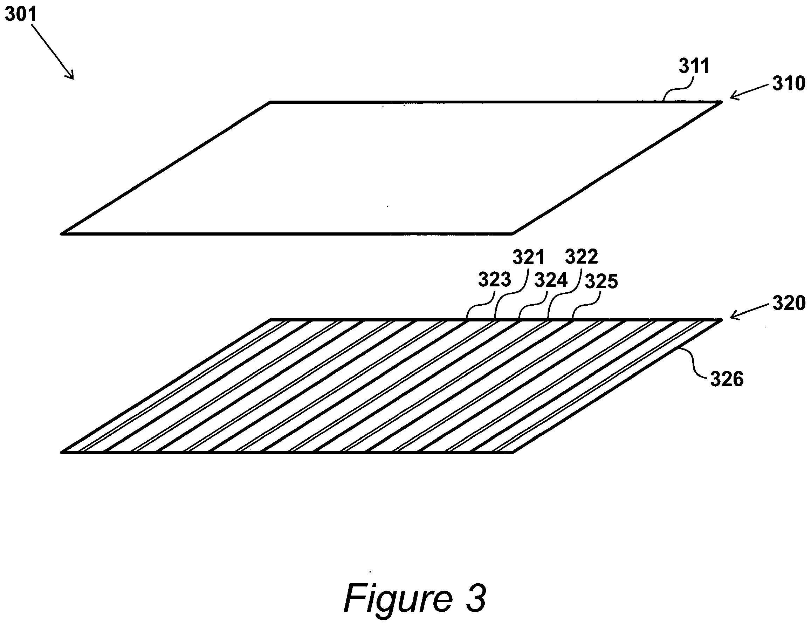

According to a first exemplary embodiment of the invention, sensor **101** provides sensing of the electrical permittivity of the volume above surface **102** in one direction. The way in which a sensor configured according to this first embodiment will be described further with reference to Figures 3 to 10.

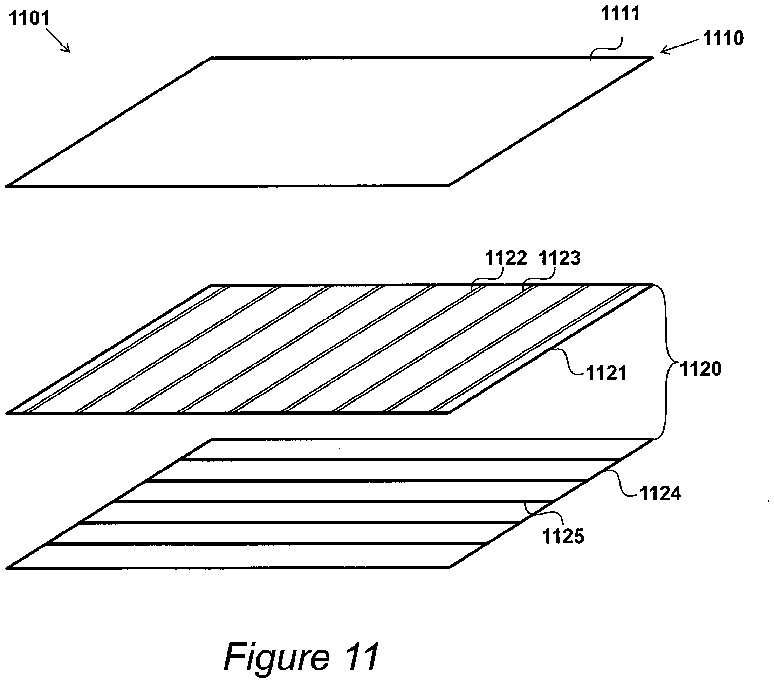

In addition, in accordance with an example which does not form part of the invention, sensor **101** provides sensing of the electrical permittivity of the volume in two substantially mutually orthogonal directions. The way in which a sensor configured according to this example will be described further with reference to Figures 11 to 16.

### *Figure 3*

An abstraction diagram of the structure of a sensor array configured in accordance with a first embodiment of the invention is shown in Figure 3. Sensor array **301,** providing substantially the function of sensor array **201,** comprises, in this example, two layers.

A dielectric layer **310** is present, which includes a sheet of dielectric material **311.** Dielectric material **311** provides a surface upon which a test object may be placed. In an embodiment, dielectric material **311** is flexible so as to allow the layer to flex if required. In another embodiment, dielectric material **311** is transparent polyester, or could alternatively be transparent polyamide. Glass could also be used.

An electrically active layer **320** is also present, and is positioned beneath dielectric layer **310.** Electrically active layer **320** comprises a first electrode set having a plurality of transmitter electrodes, such as transmitter electrodes **321** and **322,** and a plurality of receiver electrodes, such as receiver electrodes **323, 324** and **325.** The convention of representing transmitter electrodes with a white fill, and receiver electrodes with a black fill will be adhered to throughout the accompanying drawings. As can be seen in the Figure, the type of electrode alternates as one moves from right to left. Each of the transmitter electrodes is configured to capacitively couple to at least one receiver electrode.

In an example, the transmitter electrodes and the receiver electrodes comprise of conductive ink printed onto respective sides of a single membrane **326,** which is a dielectric. Alternatively, the electrodes can be printed onto the same side of a single membrane, with appropriate modification of printing patterns to avoid short circuits. In a further alternative arrangement, electrically active layer **320** comprises of two membranes (each again being dielectric), with the transmitter electrodes being printed onto one membrane and the receiver electrodes being printed onto the other.

In an embodiment, membrane **326** is a flexible dielectric material, so as to allow the sensor array to flex and conform to non-flat surfaces requiring testing. In another embodiment, membrane **326** comprises of a suitable transparent material such as polyester. In such a case, it is also possible for the ink forming the transmitter electrodes and the receiver electrodes to be transparent as well. Suitable inks comprise of indium tin oxide, or alternatively graphene. In such an embodiment, along with the configuration of dielectric layer **310** to be transparent too, the entire sensor array will be transparent, allowing it to be placed over some form of image or a display, for example.

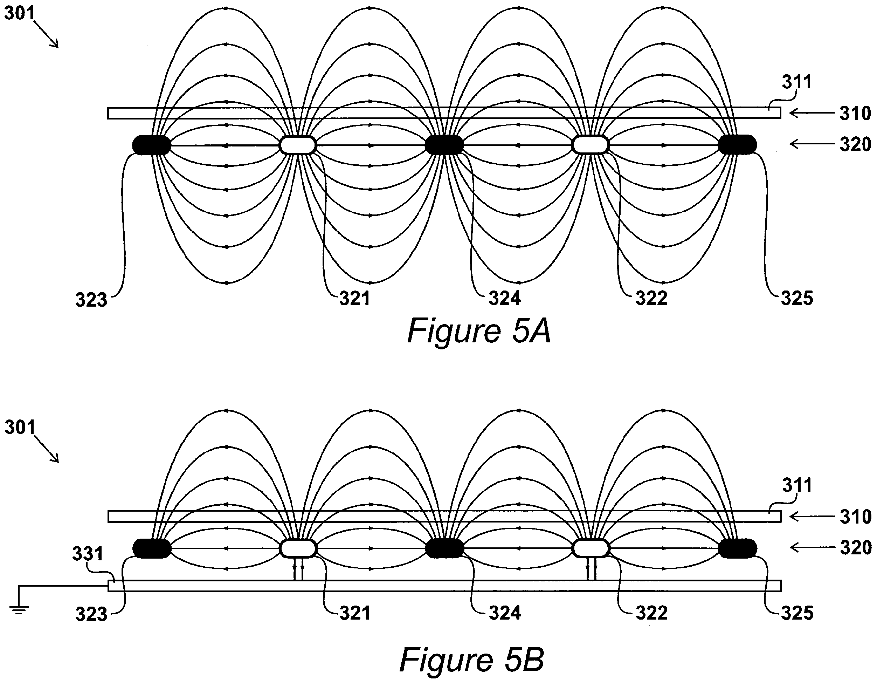

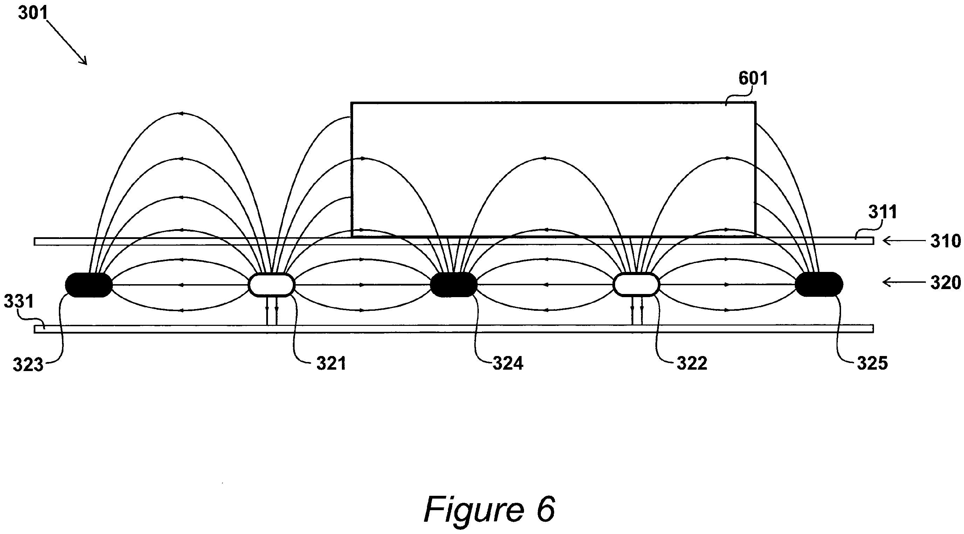

On application of a voltage to a transmitter electrode, an electric field forms which both extends outside of the sensor array and which causes capacitive coupling to other receiver electrodes in close proximity. The capacitive coupling between the electrodes will be described further with reference to Figures 5 and 6. It is also important to note that the degree to which the electric field extends outside of the surface of the sensor is dependent upon the magnitude of the voltage applied to transmitter electrodes. Thus, a higher voltage will, whilst clearly consuming more power, allow larger objects to be interrogated.

*Figure 4*

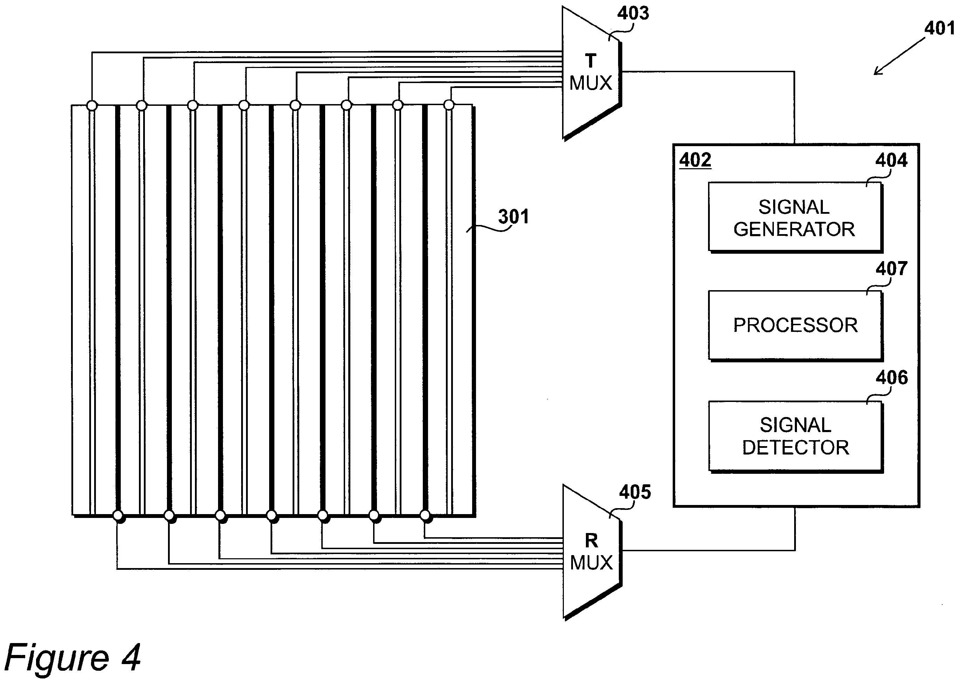

A more detailed illustration of sensor array **301** when part of a sensor **401** illustrated in Figure 2 is shown in Figure 4.

As shown in the Figure, sensor array **301** is electrically connected via a pair of multiplexers to processing device **402** (fulfilling the role of processing device **202**). A transmitter multiplexer **403** multiplexes input signals from a signal generator **404** within processing device **402** across each of the transmitter electrodes. A receiver multiplexer **405** multiplexes output signals from each receiver electrode into a signal detector **406.**

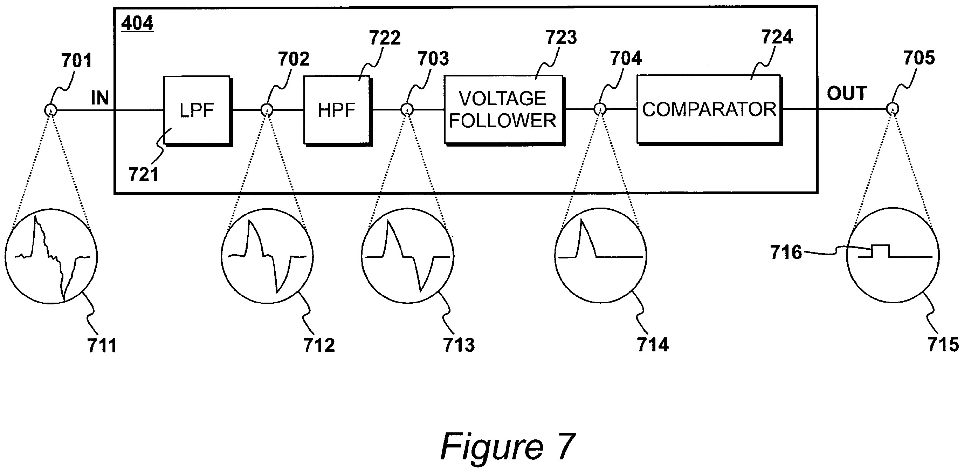

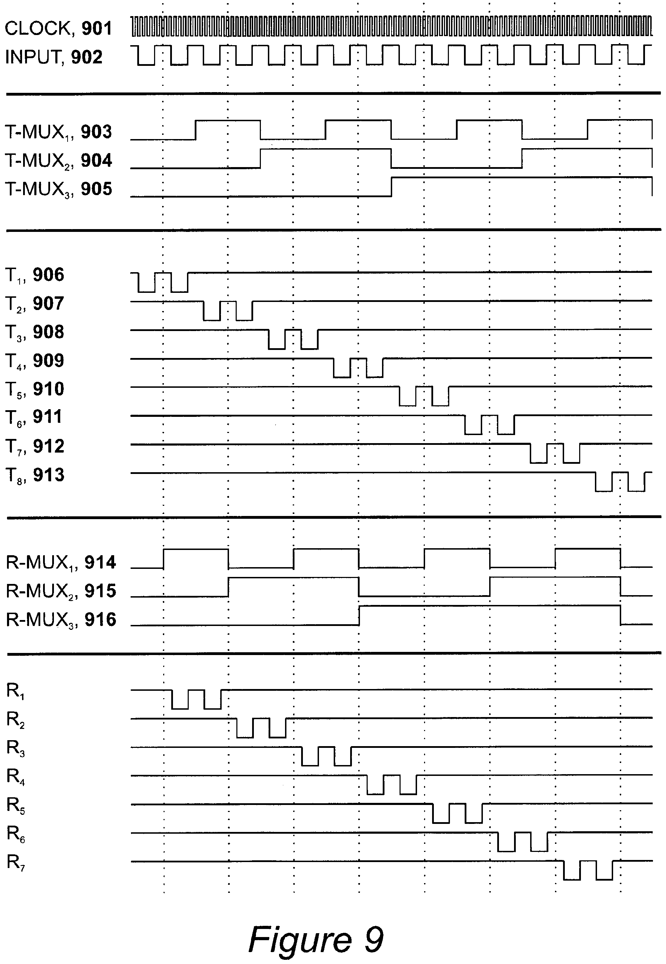

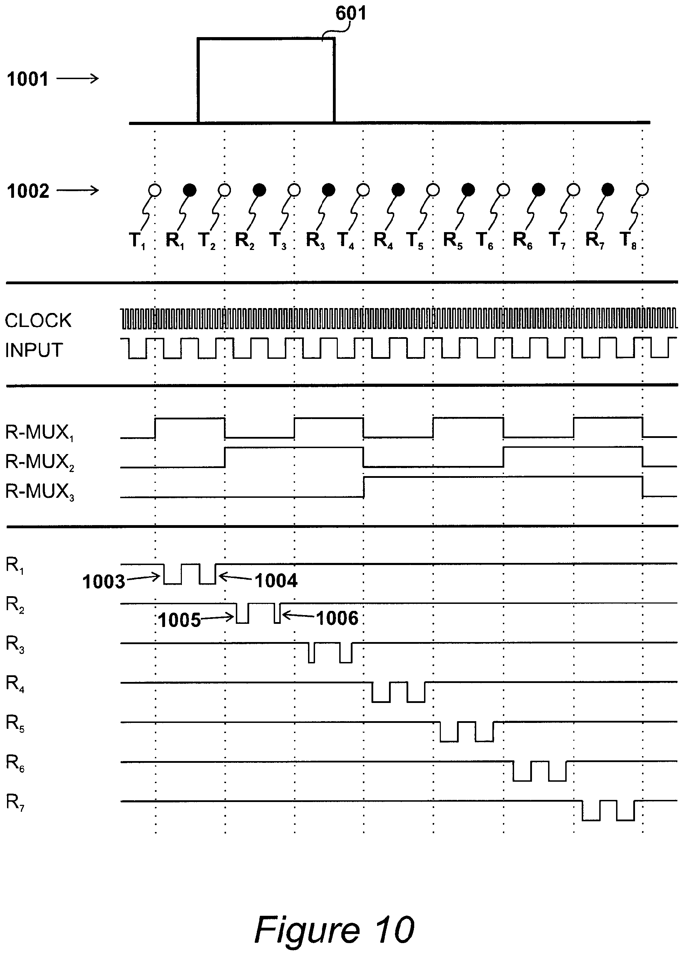

In this embodiment, signal generator **404** produces input signals, which, in an example, are square waves. Alternative waveforms, such as saw-tooths or sine waves, could be used depending upon the requirements of the sensor. The input signals are produced with reference to resolution of the clock (not shown) of a processor **407,** which, in this example has a frequency of ten megahertz. A multiple, say 1 kilohertz, of this base resolution is defined as f, and signal generator **404** produces input signals at a rate of repetition 2f (f multiplied by two). Transmitter multiplexer **403** multiplexes these input signals in sequence and at a rate f, thus resulting in two input signals being applied to each transmitter electrode. Receiver multiplexer **405** is also configured to multiplex output signals from the receiver electrodes at a rate f, albeit 180 degrees out of phase with transmitter multiplexer **403.** The result of this multiplexing of input and output signals will be described further with reference to Figures 9 and 10. In addition, the operation of signal detector **404** will also be described further, with reference to Figure 7.

Whilst illustrated in the Figure as part of processing device **402,** and possibly communicating over and internal bus, it will be appreciated that, in some embodiments, each one of signal generator **404,** signal detector **406** and processor **407** could be separate devices either connected by data cables using the RS-232 or USB standards, or by a radio-based data transmission system such as Bluetooth®. Thus, in an embodiment, signals detected by signal detector **406** are encoded into radio transmission packets by a radio transmitter (not shown) within signal detector **406,** which are then received by a radio receiver (not shown) within processor **407** which are then decoded and processed accordingly. In addition, in an embodiment, processor **407** also includes a radio transmitter (not shown) for transmitting processed data to a data logging system, for example.

*Figures 5A and 5B*

The electric field formed within a portion of sensor array **301** when a voltage is applied to transmitter electrodes **321** and **322** is shown in cross-sectional view in Figure 5A.

As can be seen in the Figure, upon application of a voltage to a transmitter electrode, such as transmitter electrode **321,** an electric field is generated which, due to receiver electrodes also being conductive, results in capacitance arising between neighbouring electrodes. As illustrated, directly between a transmitter electrode and a receiver electrode, three flux lines are present which can essentially be modelled as similar to the type of flux that is present between the two plates in a parallel-plate capacitor. As this portion of the electric field is below dielectric material **311,** upon which objects are placed, it will not be affected by changes in the electrical permittivity of the volume above the receiver electrode. However, it can also be seen that, due to the degree of voltage applied to transmitter electrode **321,** the electric field formed also extends outside of the sensor and into the volume above dielectric material **311.** This portion of the electric field also contributes to the capacitive coupling between the transmitter and receiver electrodes, but unlike the portion mentioned previously lying below dielectric material **311,** it is susceptible to changes due to the electrical permittivity of the volume through which it passes. The presence of this fringe capacitance enables the invention to interrogate the volume above the top surface of the sensor for its electrical properties, namely the electrical permittivity. As will be appreciated by those skilled in the science, the capacitance between two conductors is dependent upon the electrical permittivity of the volume between them. Thus, the invention provides a method of analysing the capacitance between transmitter and receiver electrodes, which is then indicative of the electrical permittivity of the volume above the electrodes under measurement.

Indeed, it has been realised through extensive research by the applicant that, the type of electrical permittivity sensed by a sensor in accordance with the invention is in fact the complex permittivity. As will be appreciated by those skilled in the art, the complex permittivity $\hat{\varepsilon}$ of a material is defined by:

$$\hat{\varepsilon} = \varepsilon' + i\frac{\sigma}{\omega} \qquad \textbf{(Equation 1)}$$

where $\varepsilon'$ is the real part of the permittivity, i is the imaginary unit, $\sigma$ is the conductivity of the material, and $\omega$ is the frequency of an applied electric field E. This is relevant as no material is a perfect dielectric - i.e. at some level, there will be some level of conductivity. Thus, the output of a sensor constructed in accordance with the principles of the invention will signify both the permittivity of the medium and its conductivity. It will be therefore appreciated by those skilled in the art that mention of the term "electrical permittivity" in this description also embraces the complex permittivity of a medium.

Figure 5B illustrates an embodiment of the invention that also includes an electrically grounded layer, comprising a grounded conductive sheet **331,** beneath electrically active layer **320.** This provides electromagnetic shielding of the electrically active layer from stray capacitances originating from beneath the sensor. It will be appreciated by those skilled in the science that reference to electrical "ground" and an element being electrically "grounded" in this description encompass both the case of being physically connected to Earth or to a current carrying body capable of providing a zero-voltage reference level. Thus, the term "ground" as used herein refers to the general case of a body that can be approximated as capable of providing an infinite source of and sink for charge, and can thus absorb an unlimited amount of current without a change in potential of the element connected to it.

### *Figure 6*

The electric field formed within a portion of sensor array **301** when an object such as object **601** is placed on the array is shown in cross-sectional view in Figure 6.

When compared with the air above dielectric material **311,** object **601** has a different electric permittivity. In this example, object **601** is a dielectric, and so when it is placed in the electric fields formed by transmitter electrodes **321** and **322,** polarization occurs within the object which results in the reduction of the electric field inside. This in turn causes an increase in the degree of capacitance coupling between the transmitter and receiver electrodes, in much the same way as, as will be apparent to those skilled in the science, when a dielectric is inserted into a capacitor. Thus, it will be appreciated that an output signal detected on receiver electrode **323** will differ from that on receiver electrodes **324** and **325,** over which the object is present. The output signals can then be used to determine the relative difference in permittivity between air (above receiver electrode **323**) and the object (above receiver electrodes **324** and **325).** If another type of material, such as a conductor or a semi-conductor were to be placed on the sensor, then changes to the electric field would also occur, resulting in different signals manifesting on the various receiver electrodes.

### *Figure 7*

The signal detector used to sample the output signal from a receiver electrode is shown in Figure 7.

Signal detector **406** was previously described with reference to Figure 4, in that it was arranged to receive at an input terminal a signal from receiver multiplexer **405** and to output a sample signal indicative of the voltage in a receiver electrode.

For the purposes of this example, it is assumed that the sensor array producing a signal is the sensor array shown in Figure 5B, and, due to the provision of the electrically grounded layer, has not been affected by stray capacitance and other forms of outside electrical interference. The signal produced in a receiver electrode is a voltage that peaks and decays in a positive sense when an increase in voltage is applied to a neighbouring transmitter electrode, and peaks and decays in a negative sense when a decrease in voltage is applied to a neighbouring transmitter electrode. This is due to the changes in the strength of the electric field between the transmitter and the receiver electrodes. These changes cause charge to flow to and from the receiver electrode under the influence of an induced electromotive force, which in turn results in the manifestation of a voltage on the receiver electrode.

Signal detector **406** includes an input terminal **701** at which an example signal **711** multiplexed from a receiver electrode is shown. Signal **711** is conditioned by low pass filter **721** which filters out high frequency components of the signal to give a first filtered signal **712.** First filtered signal **712** is then provided to an input **702** of a high pass filter **722** that filters out low frequency components. This filtering gives a second filtered signal **713** that is provided to one input **703** of a voltage follower **723,** which is configured to output a signal **714** representing only the positive portion of second filtered signal **713.** Voltage follower **703** has an extremely high input impedance and a very low output impedance, and thus serves to avoid crosstalk between the two sides of signal detector **406.** The output from voltage follower **723** is provided to an input **704** of a comparator **724** which is configured to compare signal **714** to a threshold voltage. This comparison process produces a comparison signal **715** having a pulse **716** at output **705** whose width in the time domain is equal to the width of signal **714** that exceeds the threshold voltage. Given identical input signals on a neighbouring transmitter electrode, the response of a receiver electrode is always identical in profile. However, the amplitude of the output signal changes in dependence upon the level of capacitive coupling present. The duration of comparison signal **715** is therefore proportional to the amplitude of the voltage developed at the receiver electrode and in turn the electrical permittivity of the volume above the receiver electrode providing the input to the signal detector.

The comparison signals produced by signal detector **406** are sampled by processor **407** by timing their durations with reference to its internal clock. The durations are stored in memory as duration data for further analysis, which can include the application of algorithms that effect interpolation of the data to give much higher spatial resolution.

*Figure 8*

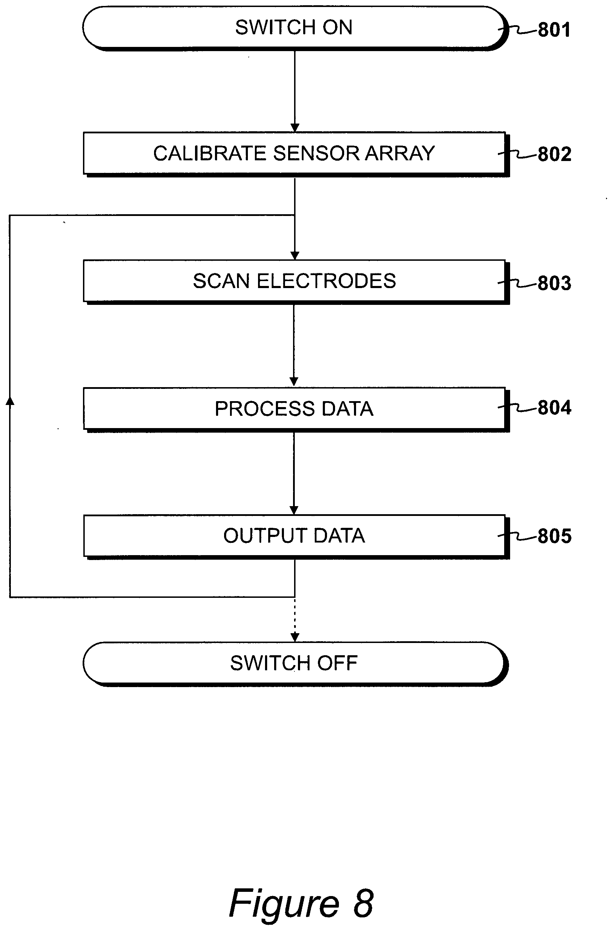

Steps carried out to initialise sensor **101** by processing device **202** are detailed in Figure 8.

At step **801,** the sensor is switched on, and at step **802** a calibration procedure is run. The calibration procedure is carried out with no object placed on the sensor, and serves to establish reference values for voltages on receiver electrodes. This has the benefit of negating any effect of temperature and humidity, which are capable of affecting the strength of received signals. Alternatively, a user of the sensor could run the calibration procedure with an object in place, if they wish to zero its permittivity values for subsequent readings. At step **803,** the sensor array is scanned by transmitting on each transmitter electrode and receiving on each receiver electrode as described previously with reference to Figure 4. This results in comparison signals being produced by signal detector **406,** which are timed by processor **407** to produce duration data.

At step **804,** the duration data is outputted at step **805** for further analysis. Control then returns to step **803** where the array is scanned again, or the sensor is switched off.

*Figure 9*

The process of scanning transmitter and receiver electrodes in a sensor array in accordance with an aspect of the invention is shown in the form of a timing diagram in Figure 9.

A clock signal is shown at **901,** and provides a reference signal by which all other timings abide by. In this example, the clock frequency is 10 megahertz, but in other embodiments the frequency is higher or lower depending upon the resolution required. At **902,** an input signal produced by signal generator **404** is illustrated and has a frequency of repetition of 2f. In this example, f is some multiple of the clock frequency shown at **901,** and so f in the present embodiment is 1 kilohertz. Signal generator **404** therefore produces input signals at a frequency of repetition of 2 kilohertz. As previously described with reference to Figure 4, transmitter multiplexer **403** is configured to multiplex input signals from signal generator **404** across each transmitter electrode in sensor array **301.** For this purpose, it includes three switching channels which are controlled by signals illustrated at **903, 904** and **905.** By altering the switching of each channel, it is possible to multiplex input signals across $2^3 = 8$ channels. The transmitter multiplexer is therefore configured to switch between its outputs in sequence and at a frequency f, which, in keeping with this example, would be at a frequency of 1 kilohertz. As shown at **906** through **913,** this results in two pulses being applied to each transmitter electrode.

The switching of channels in receiver multiplexer **405** to multiplex output signals from each receiver electrode into signal detector **406** is shown at **914, 915** and **916.** In a similar fashion to transmitter multiplexer **403,** receiver multiplexer is configured so as to switch between input channels in sequence at a frequency f, which in this case is 1 kilohertz. However, the switching of inputs occurs 180 degrees out of phase with the switching in transmitter multiplexer **403,** and so results in two output signals from each receiver electrode being provided to the signal detector. One output signal is derived from a signal transmitted from a transmitter electrode to one side of the receiver electrode, and a second output signal is derived from a signal transmitted from a transmitter electrode to another side of the receiver electrode.

In effect, therefore, each receiver electrode "listens" for capacitive coupling from a transmitter electrode to its left and then a transmitter electrode to its right. This allows the recording of two measurements of the degree of capacitive coupling per receiver electrode. In an embodiment, processing then takes place on the two measurements to effect linear interpolation. More measurements allow processing to take place to effect polynomial interpolation, resulting in more accurate data sets for analysis.

Clearly, in the example shown in the Figures, there are only seven receiver electrodes, and so one of the inputs of receiver multiplexer **405** will be connected to ground such that the measuring device receives zero input when the corresponding channel is selected.

*Figure 10*

An example of the signals provided to signal detector **406** when an object, such as object **601,** is placed on sensor array **201** is shown in Figure 10.

The object placed on the sensor array is shown at **1001,** with an arrangement of transmitter electrodes (labelled $T_1$ to Ts) and receiver electrodes (labelled $R_1$ to $R_7$) illustrated at 1002.

At **1003,** the clock signal is illustrated, again running at a frequency of 10 megahertz. Input signals shown at **1004** are produced at a frequency of repetition of 2 kilohertz, and multiplexed across the transmitter electrodes as previously described with reference to Figure 9. The switching of inputs in receiver multiplexer **405** results in all of the signals formed on the receiver electrodes being provided to signal detector **406.** For ease of illustration, the output signals produced by the signal detector are shown for the respective receiver electrode that they originated from, and are labelled $R_1$ to $R_7$.

When considering $R_1$, the output signal produced when an input signal is applied to transmitter electrode $T_1$ is shown at **1003,** and the output signal produced when an input signal is applied to transmitter electrode $T_2$ is shown at **1004.** As there is no part of the object present between $T_1$ and $R_1$, there is no change to the electric field between $T_1$ and $R_1$, and so the width of measurement signal **1003** is not changed. As there is indeed part of the object present between $R_1$ and $T_2$, there is a reduction in the width of measurement signal **1004.** The difference between signals can also be seen at **1005** and **1006,** where there is also a clear decrease in the width of the measurement due to reduction of the capacitive coupling between $T_2$ and $R_2$ and $T_3$ and $R_2$. In this embodiment, as the frequency of switching of the multiplexers happens at 8 kilohertz, and so a total scan of the array occurs at a frequency of 1 kilohertz.

The duration of each of the output signals produced by signal detector in a single scan is compared with the clock signal to produce duration data corresponding to the positions, which may then be provided to a personal computer (not shown) for later analysis. The processing of the data is carried out to interpolate the data using electrostatic field equations. Given the high clock frequency, a much higher effective resolution is provided than would be apparent simply by inspecting the physical resolution of the transmitter and receiver electrodes.

*Figure 11*

Whilst the invention has thus far been described with reference to an embodiment that senses the electrical permittivity of an object in one direction, an example, which does not form part of the invention, provides for sensing in two directions.

An abstraction diagram of the structure of a sensor array in accordance with this example is therefore shown in Figure 11. In a similar way to the first embodiment described previously with reference to Figure 3, a sensor array indicated generally at **1101** comprises two layers: a dielectric layer **1110** and an electrically active layer **1120.**

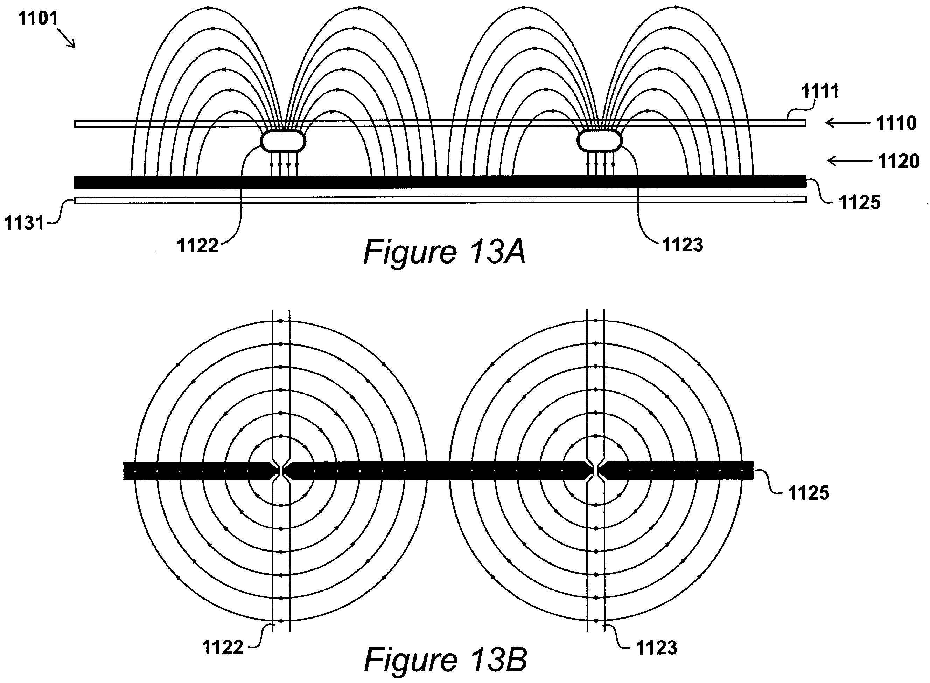

Dielectric layer **1110** is substantially the same as dielectric layer **310,** and so comprises a dielectric material **1111,** which, as described previously, may be transparent or opaque, or flexible or rigid, depending upon the chosen embodiment. Electrically active layer **1120,** however, differs in that it includes a first membrane **1121** having a first set of electrodes (such as electrodes **1122** and **1123)** and a second membrane **1124** having a second set of electrodes (such as electrode **1125).** In this embodiment, the second set of electrodes on second membrane **1124** extend substantially mutually orthogonally to those on first membrane **1121,** and, as will be described further with reference to Figure 13, allows sensor array **1101** to sense the electrical permittivity of an object placed on the sensor in two mutually orthogonal directions. Thus, in this example, the first set of electrodes extend in the x-direction, and the second set of electrodes extend in the *y*-direction.

In the present example, the first and second set of electrodes are printed using conductive ink on one side only of the two membranes. Thus, the membranes are placed together with their blank sides touching so as to avoid short circuiting. In alternative cases, an insulating material could be placed between the membranes, or each set of transmitter and receiver electrodes could be printed on respective sides of the same membrane in order to reduce costs.

In a similar way to the first embodiment described previously with respect to Figure 3, first membrane **1121,** carrying the first set of electrodes, is, in an example, a flexible dielectric material. In addition, in some examples, the membrane is transparent, and again, in some examples, the first set of electrodes comprise of substantially transparent conductive ink. In a further example, second membrane **1122,** carrying the second set of electrodes, is configured similarly to the aforesaid possible configurations of the first membrane **1121.**

*Figure 12*

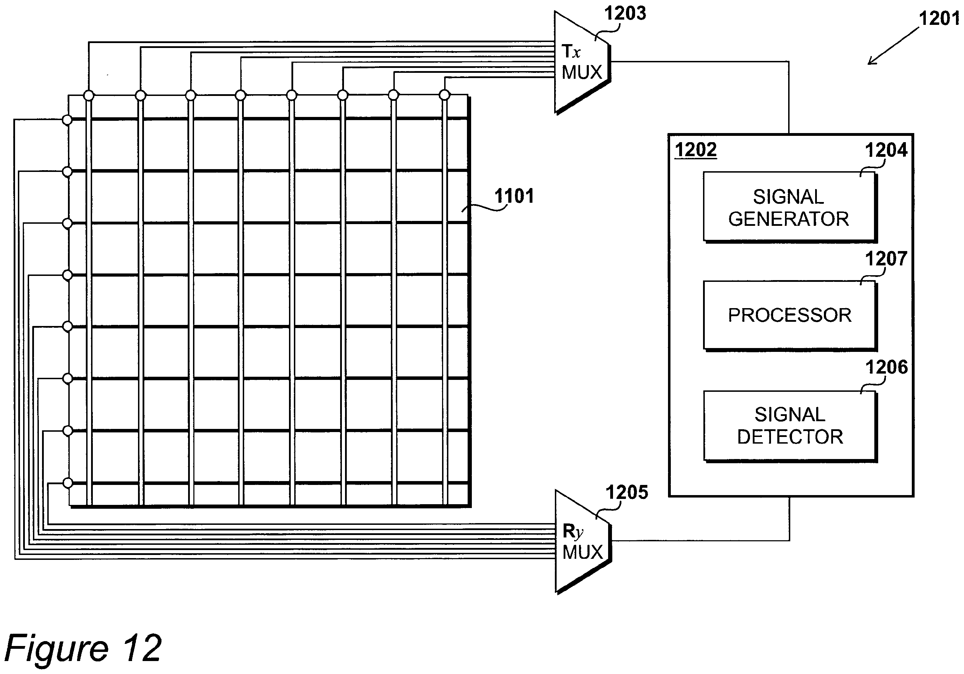

An exemplary arrangement of a sensor **1201** including sensor array **1101** is shown in Figure 12.

A processing device **1202** (fulfilling the role of processing device **202**) is present, and includes a signal generator **1204** (configured in substantially the same way to signal generator **404**), a signal detector **1206** (configured substantially in the same way to signal detector **406**) and a processor **1207** (configured substantially in the same way to processor **407**).

A transmitter multiplexer **1203** is connected to signal generator **1204** and to the first set of electrodes in sensor array **1101**, whilst receiver multiplexer **1205** is connected to the signal detector **1206** and to the second set of electrodes in sensor array **1101.**

By configuring transmitter multiplexer **1203** and receiver multiplexer **1205** accordingly, then one input signal from signal generator **202** is applied to each transmitter electrode in sequence whilst signals from one receiver electrode are received. Receiver multiplexer **1205** then switches to the next receiver electrode, and input signals are then applied to each transmitter electrode again. Thus, given an array having eight electrodes in a first set arranged substantially perpendicularly to eight electrodes in a second set, and being provided with input signals having a frequency of repetition 8f, the transmitter multiplexer switches across each electrode in the first set at a frequency 8f, and the receiver multiplexer switches between each electrode in the second set at a frequency f. This results in an output signal being produced at each intersection between an electrode in the first set and an electrode in the second set, giving, in this example, sixty-four data points following processing of comparison signals by processor **1207.**

*Figures 13A and 13B*

A cross section of sensor array **1101** is shown in Figure 13A. Sensor array **1101** includes dielectric layer **1110** and electrically active layer **1120**. In order to reduce the effect of stray capacitance, an electrically grounded layer **1131** may be provided as shown in this example. As described previously with reference to Figure 11, the electrically active layer comprises a first set of electrodes arranged substantially perpendicular to a second set of electrodes. However, as Figure 13A shows only a cross section, only one electrode in the second set, electrode **1125,** is shown.

As shown in Figure 13A, when an input signal is applied to an electrode in the first set, such as transmitter electrode **1122,** then along with parallel-plate type capacitance with electrode **1125,** there will also be an electric field extending upwards from the side and upper surfaces of electrode **1122.** A similar situation occurs between electrode **1123** and electrode **1125.**

Figure 13B illustrates the electric field when viewed from above. It will be noted that the shape of each of the electrodes includes a narrowing at the intersection with other electrodes, thereby reducing parallel-plate type capacitance between overlapping electrodes.

*Figure 14A and 14B*

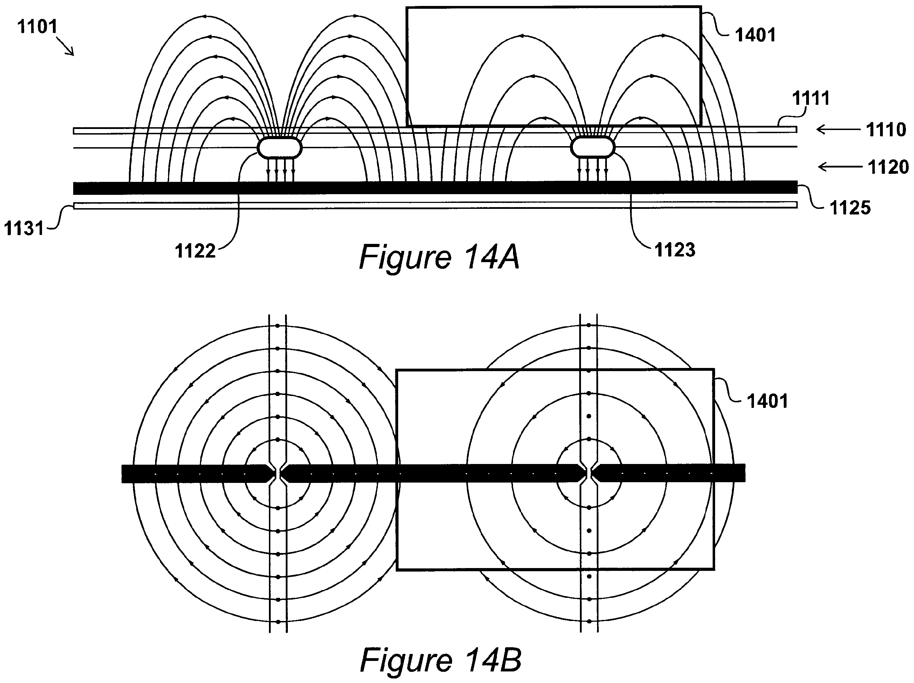

A cross section of sensor array **1101** is shown in Figure 14A with an object **1401** placed on the sensor. As described previously with reference to Figure 6, the presence of the object results in a change to the electric field and therefore the capacitive coupling between electrodes. In this case, it is the capacitance between intersecting electrodes in the first and second electrode set that is altered. As can be seen in Figure 14B, which is a view from above, the electric field is also altered in the *x-y* plane. Thus, by providing numerous intersections, such as in the example shown in Figure 12, it is possible to create a data set indicating the electrical permittivity of the volume above each intersection.

It has been realised by the present applicant that, when dealing with dielectrics on the sensor, by applying Laplace's equation (a special form of Poisson's equation), which in the context of electrostatics states that:

$$\nabla^2 V = 0 \qquad\qquad \textbf{(Equation 2)}$$

or in other words the gradient of the flux of the electric field is zero, then it is possible to exactly interpolate the data to identify the output signal of a notional electrode lying between two real electrodes. In experimental testing, this has greatly improved the resolution of the sensor array down to the scale of micrometers, with greater accuracy available by increasing the clock speed of the processor and thus the precision of the measurement of comparison signals produced by the signal detector.

A similar approach can be taken by applying Poisson's equation, which states that:

$$\nabla^2 V = -\rho / \varepsilon_0 \qquad\qquad \textbf{(Equation 3)}$$

in the case where conductors or semi-conductors are place on the sensor.

*Figure 15*

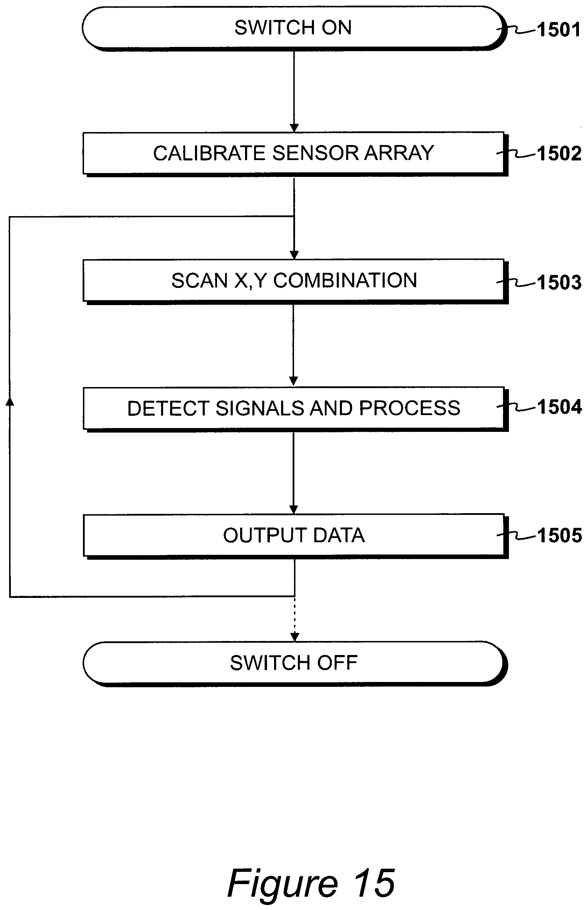

Steps carried out to initialise sensor **1201** including sensor array **1101** are detailed in Figure 15.

At step **1501,** the sensor is switched on, and at step **1502** a calibration procedure is run. The calibration procedure is carried out with no object placed on the sensor, and serves to establish reference values for output signals from the second set of electrodes. This has the benefit of negating any effect of temperature and humidity, which are capable of affecting the strength of received signals. Alternatively, a user of the sensor could run the calibration procedure with an object in place, if they wish to zero its permittivity values for subsequent readings.

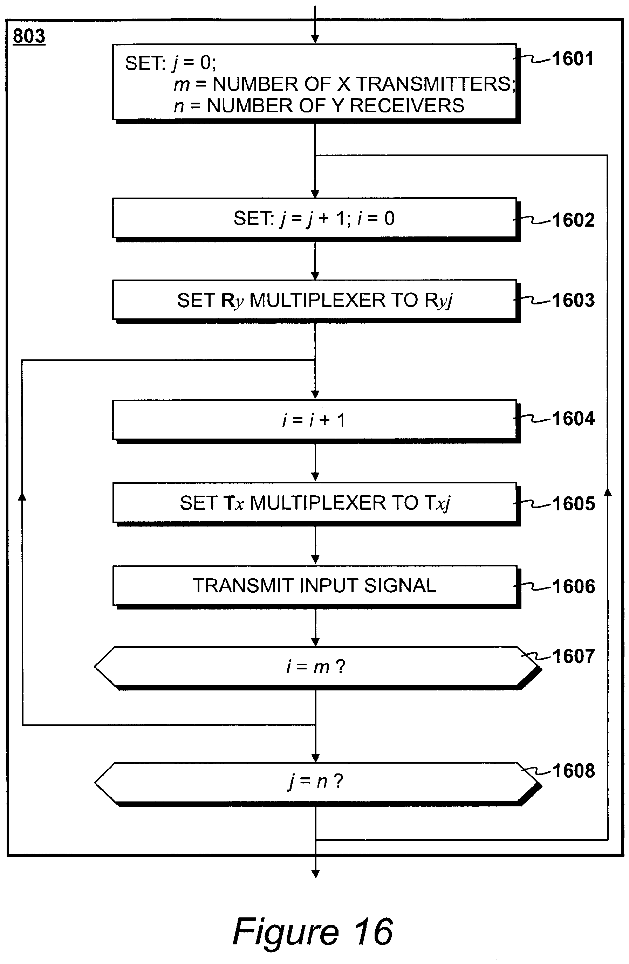

At step **1503,** the sensor array is scanned by applying input signals to electrodes in the first set (extending in the x-direction) and detecting output signals from electrodes in the second set (extending in the *y*-direction). This procedure will be described further with reference to Figure 16. At step **1505,** the comparison signal produced by signal detector **1206** is processed by processor **1207,** and the duration data produced is outputted at step **1505** for further analysis. Algorithms are then used to effect interpolation of the data, using the previously described principles of applying Laplace's equation and Poisson's equations to dielectrics and conductors/semiconductors respectively. Control then returns to step **1503** where the array is scanned again, or the sensor is switched off.

*Figure 16*

Steps carried out to effect switching between the outputs of transmitter multiplexer **1203** and the inputs of receiver multiplexer **1205** are detailed in Figure 16.

At step **1601,** the iterative variable j is set to equal 0. Constants m and n are set to be the number of electrodes in the first set and the number of electrodes in the second set, respectively.

At step **1602,** the variable j is incremented by one, and an iterative variable i is set to equal zero.

At step **1603,** receiver multiplexer **1205** is set to receive on the jth input; so in the first case, the first input.

At step **1604,** the variable i is incremented by one, and at step **1605** transmitter multiplexer **1203** is set to output on the *i*th output; so in the first case, the first output on transmitter multiplexer **1203** is selected.

At step **1606,** signal generator **1204** produces an input signal which is transmitted on the selected transmitter electrode. At step **1607,** a question is asked as to whether variable *i=m.* If this question is answered in the negative, then control returns to step **1604** where an input signal is transmitted on the next electrode in the first set.

If the question asked at step **1607** is answered in the affirmative, then a further question is asked at step **1608** as to whether the variable j is equal to n. If this question as answered in the negative, the control returns to step **1602** where j is iterated and the next electrode in the second set is selected. If the questions asked at step **1608** is answered in the affirmative, then step **1503** is complete.

The effect of this transmission is to sample electrical permittivity in the volume at all points where electrodes in the first set and electrodes in the second set intersect, thereby creating a matrix of duration data having dimension m by *n.*

**Claims**

1. A sensor (101) for sensing the electrical permittivity of an object placed thereon, said sensor including:

   a dielectric layer (310) on which a test object may be placed;
   an electrically active layer (320) beneath said dielectric layer, comprising a plurality of alternating transmitter electrodes (321, 322) and receiver electrodes (323, 324, 325), all of which extend in a first direction;
   a signal generator (404) configured to apply a signal to a first transmitter electrode, thereby causing the generation of an electric field that extends outside of said sensor at a degree determined by the magnitude of the applied voltage;
   a signal detector (406) configured to detect an output signal in a first receiver electrode caused by capacitive coupling with said first transmitter electrode; and
   a processor (407) configured to determine the electrical permittivity of the volume above the first receiver electrode based on said output signal.

2. The sensor of claim 1, further comprising an electrically grounded layer (331) beneath the first electrically active layer, wherein said electrically grounded layer is configured to electromagnetically shield the first electrically active layer.

3. The sensor of either of claims 1 or 2, wherein:

said signal generator is configured to produce an input signal that is a square wave;
said signal detector is configured to compare the output signal from said first receiver electrode to a reference voltage to produce a comparison signal having a square profile of width proportional to the electrical permittivity in the volume above said first receiver electrode; and
said processor includes a clock, and is configured to measure the duration of said comparison signal using said clock, thereby producing duration data.

4. The sensor of claim 3, further comprising a transmitter multiplexer (403) connected to each one of said transmitter electrodes, and wherein said signal generator generates input signals at a frequency of repetition of 2f, and said transmitter multiplexer is configured to multiplex said input signals across each one of said transmitter electrodes in sequence at a frequency f.

5. The sensor of claim 3, further comprising a receiver multiplexer (405) connected to each one of the receiver electrodes, and wherein said receiver multiplexer is configured to multiplex output signals from said receiver electrodes into said signal detector at a frequency f and 180 degrees out of phase with the multiplexing of said input signals.

6. The sensor of any of claims 1 to 5, wherein said signal detector comprises a radio transmitter and said processor comprises a radio receiver, and said signal detector is configured to convey an output signal to said processor using said radio transmitter.

7. A method of sensing the electrical permittivity of an object, comprising steps of:
providing a sensor array (301) including:

a dielectric layer (310) including a surface onto which a test object may be placed, and
an electrically active layer (320) beneath said dielectric layer, comprising a plurality of alternating transmitter electrodes (321, 322) and receiver electrodes (323, 324, 325), all of which extend in a first direction;
placing a test object to be sensed on the surface of the dielectric layer;
producing and applying an input signal to a first transmitter electrode, thereby generating an electric field that extends outside of said sensor array; and
detecting an output signal produced in a first receiver electrode, wherein said output signal is caused by capacitive coupling between said first transmitter electrode and said first receiver electrode, and wherein said output signal is indicative of the electrical permittivity in the volume above the first receiver electrode.

8. The method of claim 7, further comprising a step of providing an electrically grounded layer (331) beneath the electrically active layer, wherein said electrically grounded layer is configured to electromagnetically shield the electrically active layer.

9. The method of either of claims 7 or 8, wherein said electrically active layer comprises a membrane (326) on to which the electrodes have been printed using conductive ink.

10. The method of claim 9, wherein said membrane comprises of a flexible dielectric material.

11. The method of claim 9, wherein said membrane comprises of a substantially transparent material.

12. The method of claim 11, wherein the conductive ink making up the electrodes is substantially transparent conductive ink.

13. The method of any of claims 7 to 12, wherein said input signal is a square wave, and said method further comprises the step of processing the output signal by:

receiving said output signal;
comparing the output signal to a reference voltage to produce a comparison signal having a square profile of width proportional to the electrical permittivity in the volume above said first receiver electrode;
measuring the duration of said comparison signal to produce duration data corresponding to its originating electrode.

**Patentansprüche**

1. Ein Sensor (101) zum Erfassen der elektrischen Permittivität eines darauf platzierten Objekts, wobei der Sensor Folgendes umfasst:

   eine dielektrische Schicht (310), auf der ein Testobjekt platziert werden kann;
   eine elektrisch aktive Schicht (320) unter der besagten dielektrischen Schicht, welche eine Vielzahl von abwechselnden Senderelektroden (321, 322) und Empfängerelektroden (323, 324, 325) umfasst, die sich alle in einer ersten Richtung erstrecken;
   einen Signalgenerator (404), der dazu konfiguriert ist, ein Signal an eine erste Senderelektrode anzulegen, wodurch die Erzeugung eines elektrischen Felds bewirkt wird, das sich in einem durch die Größe der angelegten Spannung bestimmten Ausmaß außerhalb des Sensors erstreckt;
   einen Signaldetektor (406), der dazu konfiguriert ist, ein Ausgangssignal in einer ersten Empfängerelektrode zu detektieren, die durch kapazitive Kupplung mit der ersten Senderelektrode verursacht wird; und
   einen Prozessor (407), der konfiguriert ist, um die elektrische Permittivität des Volumens oberhalb der ersten Empfängerelektrode auf Basis des besagten Ausgangssignals zu ermitteln.

2. Der Sensor nach Anspruch 1, der ferner eine elektrisch geerdete Schicht (331) unter der ersten elektrisch aktiven Schicht umfasst, wobei die elektrisch geerdete Schicht so konfiguriert ist, dass sie die erste elektrisch aktive Schicht elektromagnetisch abschirmt.

3. Der Sensor nach Anspruch 1 oder 2, wobei:

   der Signalgenerator so konfiguriert ist, dass er ein Eingangssignal erzeugt, das eine Rechteckwelle ist;
   der Signaldetektor so konfiguriert ist, dass er das Ausgangssignal von der ersten Empfängerelektrode mit einer Referenzspannung vergleicht, um ein Vergleichssignal zu erzeugen, das ein Rechtecksignal mit einer Breite aufweist, das sich in seinem Volumen proportional zu der elektrischen Permittivität oberhalb der besagten ersten Empfängerelektrode verhält; und
   besagter Prozessor einen Zeitmesser enthält und so konfiguriert ist, dass er unter Verwendung des besagten Zeitmessers die Dauer des besagten Vergleichssignals misst, um damit Zeitdaten zu erzeugen.

4. Der Sensor nach Anspruch 3, der ferner einen Sendermultiplexer (403) umfasst, der mit jeder der Senderelektroden verbunden ist, wobei der Signalgenerator Eingangssignale mit einer Wiederholungsfrequenz von 2f erzeugt und der Sendermultiplexer zum Multiplexer der Eingangssignale über jede der besagten Senderelektroden nacheinander auf eine Frequenz *f* konfiguriert ist.

5. Der Sensor nach Anspruch 3, der ferner einen Empfängermultiplexer (405) umfasst, der mit jeder der Empfängerelektroden verbunden ist, wobei der Empfängermultiplexer zum Multiplexer der Ausgangssignale besagter Empfängerelektroden in den Signaldetektor mit einer Frequenz f und 180 Grad Phasenversatz zum Multiplexer des besagten Eingangssignals konfiguriert ist.

6. Der Sensor nach jedem der Ansprüche 1 bis 5, wobei besagter Signaldetektor einen Funksender umfasst und der Signaldetektor so konfiguriert ist, dass er ein Ausgangssignal unter Verwendung des Funksenders an den besagten Prozessor überträgt.

7. Eine Methode zur Erfassung der elektrischen Permittivität eines Objekts, die Folgendes umfasst:
   Bereitstellung eines Sensorenfeldes (301) bestehend aus:

   einer dielektrischen Schicht (310) mit einer Oberfläche, auf die das Testobjekt platziert werden kann und
   einer elektrisch aktiven Schicht (320) unter der besagten dielektrischen Schicht, bestehend aus einer Vielzahl abwechselnder Senderelektroden (321, 322) und Empfängerelektroden (323, 324, 325), die sich alle in einer ersten Richtung erstrecken;
   Platzierung eines zu detektierenden Testobjekts auf der Oberfläche der dielektrischen Schicht;
   Erzeugung und Anwendung eines Eingangssignals an eine erste Sendeelektrode, wodurch ein elektrisches Feld erzeugt wird, das sich außerhalb des besagten Sensorfeldes erstreckt; und
   Erfassung eines erzeugten Ausgangssignals in einer ersten Empfängerelektrode, wobei das Ausgangssignal durch kapazitive Kupplung zwischen besagter erster Senderelektrode und besagter erster Empfängerelektrode verursacht wird und wobei besagtes Ausgangssignal die elektrische Permittivität des Volumens oberhalb der ersten Empfängerelektrode angibt.

**8.** Die Methode nach Anspruch 7, di ferner einen Schritt zur Bereitstellung einer elektrisch geerdeten Schicht (331) unter der elektrisch aktiven Schicht umfasst, wobei die elektrische geerdete Schicht so konfiguriert ist, dass sie die elektrisch aktive Schicht elektromagnetisch abschirmt.

**9.** Die Methode nach den Ansprüchen 7 oder 8, wobei die besagte elektrisch aktive Schicht eine Membran (326) umfasst, auf welche die Elektroden unter Verwendung leitfähiger Tinte aufgedruckt wurden.

**10.** Die Methode nach Anspruch 9, wobei die Membran aus einem flexiblen dielektrischen Material besteht.

**11.** Die Methode nach Anspruch 9, wobei die besagte Membran aus einem im Wesentlichen durchsichtigen Material besteht.

**12.** Die Methode nach Anspruch 11, wobei die leitfähige Tinte, welche die Elektroden erzeugt, im Wesentlichen eine transparente leitfähige Tinte ist.

**13.** Die Methode nach jedem der Ansprüche 7 bis 12, wobei besagtes Eingangssignal eine Rechteckwelle ist und besagte Methode weiterhin den Schritt der Verarbeitung des Ausgangssignals durch Folgendes umfasst:

Empfang des Ausgangssignals;
Vergleich des Ausgangssignals mit einer Referenzspannung zur Erzeugung eines Vergleichssignals mit einem Rechteckprofil einer Breite, die sich im Volumen proportional zur elektrischen Permittivität oberhalb der besagten ersten Empfängerelektrode verhält;
Messung der Dauer des besagten Vergleichssignals zur Erzeugung von Zeitdaten, die der es erzeugenden Elektrode entsprechen.

## Revendications

**1.** Capteur (101) pour la détection de la permittivité électrique d'un objet placé dessus, ledit capteur comprenant :

une couche diélectrique (310) sur laquelle un objet à tester peut être placé ;
une couche électro-active (320) située sous ladite couche diélectrique, comprenant une pluralité d'électrodes émettrices alternatives (321, 322) et d'électrodes réceptrices (323, 324, 325) s'étendant toutes dans une première direction ;
un générateur de signaux (404) configuré pour appliquer un signal à une première électrode émettrice, en donnant ainsi lieu à la production d'un champ électrique s'étendant hors dudit capteur, à un degré déterminé par l'amplitude de la tension appliquée ;
un détecteur de signaux (406) configuré pour détecter un signal de sortie dans une première électrode réceptrice causé par un couplage capacitif avec ladite première électrode émettrice ; et
un processeur (407) configuré pour déterminer la permittivité électrique du volume au-dessus de la première électrode réceptrice en fonction dudit signal de sortie.

**2.** Capteur selon la revendication 1, comprenant en outre une couche mise à la masse électriquement (331) sous la première couche électro-active, ladite couche mise à la masse électriquement étant configurée pour assurer une protection électromagnétique de la première couche électro-active.

**3.** Capteur selon une des revendications 1 ou 2,

ledit générateur de signaux étant configuré pour émettre un signal d'entrée qui est une onde carrée ;
ledit détecteur de signaux étant configuré pour comparer le signal de sortie de ladite première électrode réceptrice avec une tension de référence pour produire un signal de comparaison présentant un profil carré dont la largeur est proportionnelle à la permittivité électrique dans le volume au-dessus de ladite première électrode réceptrice ; et
ledit processeur comprenant une horloge, et étant configuré pour mesurer la durée dudit signal de comparaison à l'aide de ladite horloge, en produisant ainsi des données de durée.

4. Capteur selon la revendication 3, comprenant un émetteur-multiplexeur (403) connecté à chacune desdites électrodes émettrices, et ledit générateur de signaux émettant des signaux d'entrée à une fréquence de répétition 2f, et ledit émetteur-multiplexeur étant configuré pour multiplexer lesdits signaux d'entrée sur chacune desdites électrodes émettrices en séquence à une fréquence f.

5. Capteur selon la revendication 3, comprenant en outre un récepteur-multiplexeur (405) connecté à chacune des électrodes réceptrices, et ledit récepteur-multiplexeur étant configuré pour multiplexer des signaux de sortie émis par lesdites électrodes réceptrices dans ledit détecteur de signaux à une fréquence f et un déphasage de 180 degrés avec le multiplexage desdits signaux d'entrée.

6. Capteur selon une quelconque des revendications 1 à 5, ledit détecteur de signaux comprenant un émetteur radio, et ledit processeur comprenant un récepteur radio, et ledit détecteur de signaux étant configuré pour amener un signal de sortie audit processeur en utilisant ledit émetteur radio.

7. Méthode de détection de la permittivité électrique d'un objet, comprenant les étapes suivantes :
mise en place d'un réseau de capteurs (301) comprenant :

une couche diélectrique (310) comprenant une surface sur laquelle peut être placé un objet à tester, et
une couche électro-active (320) située sous ladite couche diélectrique, comprenant une pluralité d'électrodes émettrices alternatives (321, 322) et d'électrodes réceptrices (323, 324, 325) s'étendant toutes dans une première direction ;
mise en place d'un objet à tester sur la surface de la couche diélectrique ;
émission et application d'un signal d'entrée à une première électrode émettrice, en produisant ainsi un champ électrique s'étendant hors dudit réseau de capteurs ; et
détection d'un signal de sortie produit dans une première électrode réceptrice, ledit signal de sortie étant causé par un couplage capacitif entre ladite première électrode émettrice et ladite première électrode réceptrice, et ledit signal de sortie étant indicatif de la permittivité électrique dans le volume au-dessus de la première électrode réceptrice.

8. Méthode selon la revendication 7, comprenant en outre une étape de mise en place d'une couche mise à la masse électriquement (331) sous la couche électro-active, ladite couche mise à la masse électriquement étant configurée pour assurer une protection électromagnétique de la couche électro-active.

9. Méthode selon la revendication 7 ou 8, ladite couche électro-active comprenant une membrane (326) sur laquelle les électrodes ont été imprimées à l'aide d'une encre conductrice.

10. Méthode selon la revendication 9, ladite membrane comprenant un matériau diélectrique flexible.

11. Méthode selon la revendication 9, ladite membrane comprenant un matériau substantiellement transparent.

12. Méthode selon la revendication 11, l'encre conductrice constituant les électrodes étant une encre conductrice substantiellement transparente.

13. Méthode selon une quelconque des revendications 7 à 12, ledit signal d'entrée étant une onde carrée, et ladite méthode comprenant en outre l'étape de traitement du signal de sortie

en mesurant ledit signal de sortie ;
en comparant le signal de sortie avec une tension de référence de façon à produire un signal de comparaison présentant un profil carré, dont la largeur est proportionnelle à la permittivité électrique dans le volume au-dessus de ladite première électrode réceptrice ; et
en mesurant la durée dudit signal de comparaison pour produire des données de durée correspondant à son électrode originaire.

101

102

103

*Figure 1*

EP 3 627 147 B1

EP 3 627 147 B1

**201**

**202**

SENSOR
ARRAY

PROCESSING
DEVICE

INPUT

OUTPUT

*Figure 2*

Figure 3

*Figure 4*

EP 3 627 147 B1

*Figure 5A*

*Figure 5B*

EP 3 627 147 B1

*Figure 6*

EP 3 627 147 B1

*Figure 7*

*Figure 8*

*Figure 9*

*Figure 10*

*Figure 11*

EP 3 627 147 B1

*Figure 12*

*Figure 13A*

*Figure 13B*

EP 3 627 147 B1

*Figure 14A*

*Figure 14B*

EP 3 627 147 B1

SWITCH ON ~1501

↓

CALIBRATE SENSOR ARRAY ~1502

↓

SCAN X,Y COMBINATION ~1503

↓

DETECT SIGNALS AND PROCESS ~1504

↓

OUTPUT DATA ~1505

↓

SWITCH OFF

*Figure 15*

*Figure 16*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1121242 A
- US 410764
- EP 12813936 A

### Non-patent literature cited in the description

- **XIA CHEN et al.** Image reconstruction for an electrical capacitance tomography system based on a least-squares support vector machine and a self-adaptive particle swarm optimization algorithm. *Measurement Science and Technology,* 2011, vol. 22, 104008
- **SUNG QUEK et al.** Miniature Electrical Tomography for Micro-Fluidic Systems. *6th World Congress on Industrial Process Tomography,* 1320-1326
- **CHEN et al.** Design of a security screening system with a capacitance sensor matrix operating in single-electrode mode. *Measurement Science and Technology,* 2011, vol. 22, 114026